# EUROPEAN PATENT APPLICATION

(11) **EP 4 497 930 A1**
(43) Date of publication of application: **29.01.2025**
(21) Application number: 24190677.5
(22) Date of filing: 24.07.2024
(51) Int. Cl.: F02D 41/00, F02D 19/10, F02D 35/02

(54) **ENGINE DEVICE AND METHOD OF CONTROLLING ENGINE DEVICE**

(30) Priority: 27.07.2023 JP 2023122535
(71) Applicant: Yanmar Holdings Co., Ltd., Osaka-shi, Osaka (JP)
(72) Inventor: TAKEMOTO, Toru, Osaka (JP); MORITA, Gin, Osaka (JP); MATSUNAGA, Daichi, Osaka (JP); TENTORA, Takafumi, Osaka (JP); KAMINO, Takafumi, Osaka (JP)
(74) Representative: Dennemeyer & Associates S.A.

(57) **Abstract**

[Problem] Provided are an engine device in which a combustion condition of an engine is grasped and abnormal combustion can be predicted before the occurrence of abnormal combustion; and a method of controlling the engine device.

[Solution] In an engine device 1 driven by gaseous fuel, combustion duration in a combustion chamber 12a in an engine 2 is detected, abnormal combustion occurring in the combustion chamber 12a is estimated based on a correlation between the combustion duration and abnormal combustion (backfiring), and a suppression method for suppressing the abnormal combustion is determined when the abnormal combustion is estimated. The engine device 1 performs control to shorten the combustion duration as the suppression method.

## Description

### TECHNICAL FIELD

The present invention relates to an engine device driven by inputting gaseous fuel into a combustion chamber and to a method of controlling the engine device.

### BACKGROUND ART

Heretofore used engine devices include a gas engine driven by inputting gaseous fuel such as hydrogen into a combustion chamber inside a cylinder, and a dual fuel engine driven by inputting at least one of gaseous fuel such as hydrogen and liquid fuel such as light oil or heavy oil into a combustion chamber inside a cylinder. For example, a dual fuel engine operates in either a gas operation mode in which gaseous fuel is input into a combustion chamber to drive the engine or a diesel operation mode in which liquid fuel is input into a combustion chamber to driven the engine. As another operation mode, a dual fuel engine operates in a multi-fuel mode in which both gaseous fuel and liquid fuel are input into a combustion chamber to drive the engine. In such an engine device, since abnormal combustion such as preignition in which the gaseous fuel self-ignites in the combustion chamber may occur before ignition in a micro-pilot method for injecting a small amount of the liquid fuel or before ignition by a spark ignition-type ignition device using an ignition plug, it is required to suppress such abnormal combustion.

For example, according to Patent Document 1, an engine controlling device for controlling an engine in which hydrogen is directly supplied into a combustion chamber during a compression stroke includes: a determining means for determining whether or not a torque down control condition is satisfied; an injection start timing correction means for performing correction to advance the hydrogen injection start timing from a compression stroke to an intake stroke so as to reduce the drive torque of the engine; and a spark timing correction means for performing correction to retard the spark timing so as to reduce the drive torque of the engine. When the determination means determines that the torque down control condition is satisfied, the engine controlling device corrects, with the injection start timing correction means, the hydrogen injection start timing to advance from the compression stroke to the intake stroke in an operation region where backfiring is likely to occur, and corrects, with the spark timing correction means, the spark timing to retard in an operation region where backfiring is unlikely to occur.

A hydrogen engine controlling device according to Patent Document 2 includes a hydrogen supplying means for supplying hydrogen and a controlling means for controlling a hydrogen supply timing by switching and combining intake stroke supply for supplying hydrogen to the hydrogen supplying means during an intake stroke and compression stroke supply for supplying hydrogen to the hydrogen supplying means during a compression stroke, the controlling device further including an exhaust gas recirculation means for recirculating exhaust gas to an intake system. In a first engine operation condition in which the engine rotation rate is lower than a predetermined first rotation rate, the controlling means causes the hydrogen supplying means to perform the compression stroke supply and causes the exhaust gas recirculation means to recirculate exhaust gas to the intake system. In addition, in a second engine operation condition in which the engine rotation rate is equal to or higher than the first rotation rate and is lower than a predetermined second rotation rate higher than the first rotation rate, the controlling means causes the hydrogen supplying means to perform the intake stroke supply and the compression stroke supply and causes the exhaust gas recirculation means to recirculate exhaust gas to the intake system. In a third engine operation condition in which the engine rotation rate is equal to or higher than the second rotation rate, the controlling unit causes the hydrogen supplying unit to perform the intake stroke supply and the compression stroke supply.

An internal combustion engine controlling device according to Patent Document 3 includes: an occurrence frequency detection means that detects an occurrence frequency of preignition per unit time; and a temperature region changeable means that changes a range of a preignition suppression temperature region so that when the occurrence frequency of preignition exceeds an allowable limit in at least a partial region of a preignition suppression temperature region, the occurrence frequency of preignition becomes equal to or less than the allowable limit also in the partial region. Then, a cylinder wall temperature controlling means of this controlling device controls the preignition suppression temperature region changed by the temperature region changeable means so that a wall temperature parameter falls within the preignition suppression temperature region.

### PRIOR ART DOCUMENT

### PATENT DOCUMENT

Patent Document 1: Japanese Patent No. 4406880
Patent Document 2: Japanese Patent No. 4618150
Patent Document 3: Japanese Patent No. 5939263

### SUMMARY OF INVENTION

### TECHNICAL PROBLEM

In the related art described in Patent Document 1, since the backfiring (backfire) suppression control is determined when the torque down control condition is satisfied without defining or detecting the combustion condition of the engine, the effect of the backfiring suppression control is limited.

In the related art described in Patent Document 2, since preignition is suppressed and controlled by selectively using the compression stroke supply, the intake stroke supply, and the exhaust gas recirculation based on the evaluation on the engine rotation rate, without defining or detecting the combustion condition of the engine, the effect of the preignition suppression control is limited. Further, in this related art, since abnormal combustion is suppressed and controlled without changing combustion control items such as the ignition timing and the ignition energy of the engine, the effect of the abnormal combustion suppression control is limited.

In the related art described in Patent Document 3, since the preignition suppression control is determined by evaluating only the occurrence frequency of preignition without defining or detecting the combustion condition of the engine, the effect of the preignition suppression control is limited.

As described above, in the engines of the related art, since the operation condition (combustion condition) of the engine in which abnormal combustion occurs cannot be accurately grasped, it is not possible to predict abnormal combustion before the occurrence of abnormal combustion, and it is only possible to suppress abnormal combustion having occurred in the engine. Therefore, damage due to abnormal combustion may accumulate in the engine and damage the engine.

An object of the present invention is to provide an engine device in which a combustion condition of an engine can be grasped, and abnormal combustion can be predicted before the occurrence of abnormal combustion, and to provide a method of controlling the engine device.

### SOLUTION TO PROBLEM

In order to solve the above problem, an engine device of the present invention is driven by gaseous fuel and is characterized in that combustion duration in a combustion chamber is detected; abnormal combustion occurring in the combustion chamber is estimated based on a correlation between the combustion duration and abnormal combustion; and a suppression method for suppressing the abnormal combustion is determined when the abnormal combustion is estimated.

Furthermore, in order to solve the above problem, a method of controlling an engine device of the present invention is a method of controlling an engine driven by gaseous fuel, the method characterized in that combustion duration in a combustion chamber is detected; abnormal combustion occurring in the combustion chamber is estimated based on a correlation between the combustion duration and abnormal combustion; and a suppression method for suppressing the abnormal combustion is determined when the abnormal combustion is estimated.

### ADVANTAGEOUS EFFECTS OF INVENTION

According to the present invention, an engine device in which a combustion condition of an engine is grasped, and abnormal combustion can be predicted before the occurrence of abnormal combustion, and a method of controlling the engine device are provided.

### BRIEF DESCRIPTION OF DRAWINGS

FIG. 1 is a schematic diagram illustrating an example of an engine device according to an embodiment of the present invention.
FIG. 2 is a graph showing an example of an operable region in relation to ignition timing and air excess ratio in an engine device.
FIG. 3 is a graph showing an example of distribution of combustion duration in the operable region in relation to ignition timing and air excess ratio in the engine device according to the embodiment of the present invention.
FIG. 4 is a graph showing an example of relationship between combustion duration and air excess ratio in a combustion chamber in the engine device according to the embodiment of the present invention.
FIG. 5 is a graph showing an example of relationship between combustion duration and air excess ratio in the combustion chamber in the engine device according to the embodiment of the present invention.
FIG. 6 is a graph showing an example of relationship between combustion duration and air excess ratio in the combustion chamber in the engine device according to the embodiment of the present invention.
FIG. 7 is a flowchart showing an example of an abnormal combustion suppression operation in the engine device according to the embodiment of the present invention.

### DESCRIPTION OF EMBODIMENTS

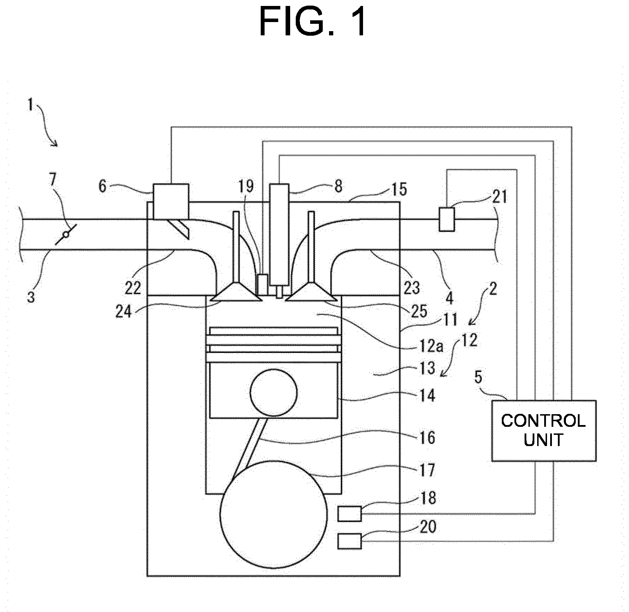

An engine device 1, which is an embodiment of the present invention, is described with reference to drawings. As illustrated in FIG. 1, the engine device 1 includes an engine 2, an intake passage 3, an exhaust passage 4, and a control unit 5.

In particular, in the present embodiment, the engine device 1 is a gas engine configured such that the engine can be driven by inputting gaseous fuel such as hydrogen into a combustion chamber 12a of the engine 2, and the engine device 1 includes a gaseous fuel injection unit 6 for inputting the gaseous fuel, a throttle valve 7 for adjusting an intake air amount, and an ignition device 8 igniting the gaseous fuel inside the combustion chamber 12a.

The engine 2 is configured such that a cylinder block 11 includes a plurality of cylinder engines 12. However, only one cylinder engine 12 is illustrated in FIG. 1. As illustrated in FIG. 1, each cylinder engine 12 is composed of a cylinder 13, a piston 14, and a cylinder head 15. The gaseous fuel injection unit 6 and the ignition device 8 are provided for each of the cylinder engines 12.

The cylinder 13 is formed to have a cylindrical shape in the cylinder block 11, and the piston 14 is slidably housed in the cylinder 13, for example. The cylinder head 15 is attached to the upper side of the cylinder 13, and the cylinder 13 and the cylinder head 15 form the combustion chamber 12a inside thereof.

A crankshaft 17 is coupled to the piston 14 via a connecting rod 16 below the cylinder 13, and reciprocating motion of the piston 14 is converted into rotary motion of the crankshaft 17 via the connecting rod 16.

The cylinder 13 is provided with an angle sensor 18 that detects the rotation angle of the crankshaft 17, that is, the rotation number of the engine 2, and the angle sensor 18 sends a detection result to the control unit 5. The cylinder 13 is provided with a pressure sensor 19 that detects the internal pressure of the combustion chamber 12a, that is, the cylinder pressure of the cylinder 13, and the pressure sensor 19 sends a detection result to the control unit 5. The cylinder 13 is provided with a torque sensor 20 that detects the engine load (engine torque) of the engine 2 in the vicinity of the crankshaft 17, and the torque sensor 20 sends a detection result to the control unit 5.

The cylinder head 15 also has an intake port 22 and an exhaust port 23 communicating to the combustion chamber 12a of the cylinder 13, and an intake valve 24 and an exhaust valve 25 opening and closing the intake port 22 and the exhaust port 23 with respect to the combustion chamber 12a, respectively, are provided.

The intake port 22 is connected to the intake passage 3 and introduces air supplied from the intake passage 3 to the combustion chamber 12a. The exhaust port 23 is connected to the exhaust passage 4 and discharges exhaust gas generated in the combustion chamber 12a to the exhaust passage 4. Mixture gas of fuel gas and air can be taken into the combustion chamber 12a via the intake port 22 by opening the intake valve 24. Meanwhile, exhaust gas generated in the combustion chamber 12a can be discharged via the exhaust port 23 by opening the exhaust valve 25.

Although an example in which the intake passage 3 and the intake port 22 are directly connected is illustrated in FIG. 1, an intake manifold having a branched passage branched from the intake passage 3 to the plurality of cylinder engines 12 may be provided between the intake passage 3 and the engine 2 in order to connect the intake passage 3 to each of the intake ports 22 of the plurality of cylinder engines 12. In addition, although an example in which the exhaust passage 4 and the exhaust port 23 are directly connected is illustrated in FIG. 1, an exhaust manifold having a branched passage branched from the exhaust passage 4 to the plurality of cylinder engines 12 may be provided between the exhaust passage 4 and the engine 2 when the exhaust passage 4 is connected to each of the exhaust ports 23 of the plurality of cylinder engines 12.

In each of the cylinder engines 12, the gaseous fuel injection unit 6 is provided to the intake port 22, is controlled by the control unit 5, and injects gaseous fuel supplied from a gaseous fuel tank (not shown) to the intake port 22. Mixture gas of air supplied from the intake passage 3 and the gaseous fuel supplied from the gaseous fuel tank (not shown) is supplied to the combustion chamber 12a from the intake port 22. The gaseous fuel injection unit 6 is composed of a gas admission valve, a gas injector, or the like, for example. The amount of the gaseous fuel injected, the pressure for injecting the gaseous fuel, the timing of injecting the gaseous fuel, and the like of the gaseous fuel injection unit 6 are controlled by the control unit 5, and the air-fuel ratio in the combustion chamber 12a can be richened by increasing the injection amount or the injection pressure, for example.

The ignition device 8 is provided to the cylinder head 15 in each of the cylinder engines 12. The ignition device 8 employs, for example, a micro-pilot method for injecting a small amount of liquid fuel and is composed of an injector injecting liquid fuel supplied from a liquid fuel tank (not shown) to the combustion chamber 12a below the cylinder head 15, for example. The amount of the liquid fuel injected, the pressure for injecting the liquid fuel, the timing of injecting the liquid fuel, and the like for the ignition device 8 employing a micro-pilot method are controlled by the control unit 5, and the ignition power can be increased by increasing the injection amount or the injection pressure, for example.

Alternatively, the ignition device 8 may be composed of a spark ignition-type device using a spark plug. The spark energy (for example, power supplied to the spark plug) or the like for the spark ignition-type ignition device 8 is controlled by the control unit 5, and the ignition power can be increased by increasing the spark energy, for example.

The intake passage 3 is connected to the intake port 22 of the cylinder engine 12 of the engine 2 and supplies compressed and cooled air to each of the cylinder engines 12 via the intake port 22. Incidentally, a turbocharger (not shown) that compresses air flowing through the intake passage 3 and sends same to the downstream side in the intake direction or an intercooler (not shown) that cools air flowing through the intake passage 3 may be provided to the intake passage 3. In addition, an air filter (not shown) that purifies fresh air and introduces same may be provided to the upstream end in the intake direction of the intake passage 3.

The throttle valve 7 for adjusting the intake air amount sent to the intake port 22 is provided to the intake passage 3. The opening degree of the throttle valve 7 is adjusted through control by the control unit 5, the throttle valve 7 adjusts the intake air amount sent to the intake port 22 according to the opening degree of the throttle valve 7 and thus can adjust the air excess ratio (ratio of intake air in the mixture gas) of the mixture gas of air and the gaseous fuel input into the combustion chamber 12a from the intake port 22, and the air-fuel ratio in the combustion chamber 12a can be richened by reducing the intake air amount, for example. That is, the flow rate of air supplied to the intake port 22 from the intake passage 3 can be adjusted by adjusting the opening degree of the throttle valve 7.

The exhaust passage 4 is connected to the exhaust port 23 of each of the cylinder engines 12 of the engine 2 and discharges exhaust gas generated in each of the cylinder engines 12 via the exhaust port 23. An air-fuel ratio sensor 21 that detects the air-fuel ratio of the exhaust gas is provided to the exhaust passage 4, and the air-fuel ratio sensor 21 sends a detection result to the control unit 5.

The control unit 5 is a computer such as an engine control unit (ECU) that controls operation of the engine 2, is provided with a CPU, a ROM, a RAM, and the like, and is configured to control each unit of the engine 2. The control unit 5 may store various programs for controlling the engine 2 and control the engine 2 by reading out a program and executing same.

In the engine device 1, the ignition device 8 is usually actuated at an ignition timing by the control unit 5, and gaseous fuel inside the combustion chamber 12a is ignited by injecting liquid fuel into the combustion chamber 12a at a predetermined liquid fuel injection timing (injection timing) to start combustion, for example. However, when an abnormal condition such as an excessively high temperature or an excessively high pressure occurs inside the combustion chamber 12a, gaseous fuel inside the combustion chamber 12a may self-ignite before the ignition timing (liquid fuel injection timing), and abnormal combustion such as preignition may occur.

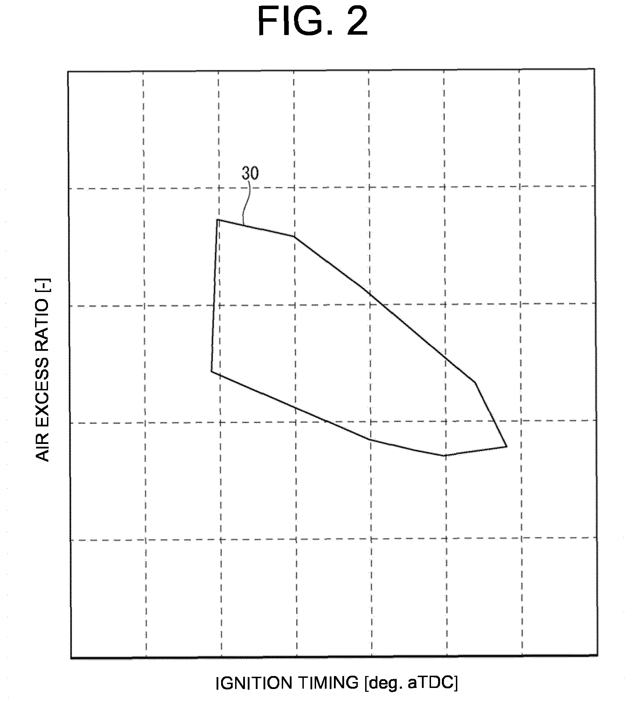

In addition, when the engine device 1 is operated, as shown in FIG. 2, in relation to the ignition timing (liquid fuel injection timing) in the combustion chamber 12a and the air excess ratio (ratio of intake air in the mixture gas) of the mixture gas input into the combustion chamber 12a, the engine device 1 can be operated within the range of the operable region 30, but on the outside of the range of the operable region 30, dangerous combustion is highly likely to occur in the combustion chamber 12a, and the engine device 1 cannot be operated.

In addition, abnormal combustion such as preignition is highly likely to occur in the engine 2 in the vicinity of a boundary portion of the operable region 30 even within the range of the operable region 30. For example, preignition and backfiring (backfire) as abnormal combustion are highly likely to occur in the vicinity of a boundary portion 31 on the side on which the air excess ratio is relatively high and the ignition timing is relatively retarded in the operable region 30.

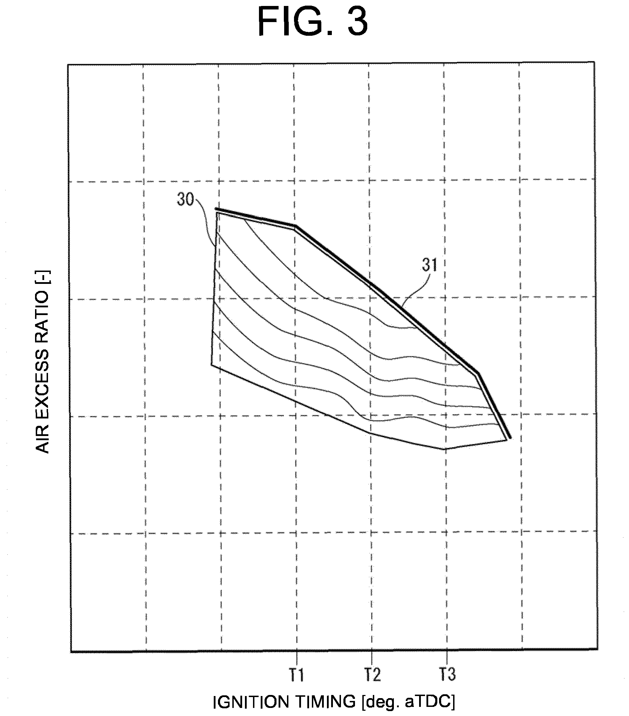

FIG. 3 shows a result obtained by monitoring the combustion duration related to the combustion enhancement degree in the combustion chamber 12a when the engine device 1 is operated within the range of the operable region 30. For example, the control unit 5 detects the rotation angle (deg) of the crankshaft 17 with the angle sensor 18 during operation of the engine device 1 and simultaneously detects the cylinder pressure of the cylinder 13 with the pressure sensor 19 to calculate a heat generation rate in the combustion chamber 12a based on the change in the cylinder pressure of the cylinder 13 and the change in the volume of the combustion chamber 12a. Then, the control unit 5 calculates, as the combustion duration, the difference (distance) between the crank angles of the crankshaft 17 at which the heat generation amount obtained by accumulating the heat generation rate over the crank angles during combustion process in the combustion chamber 12a is 10% and 90% of the total, respectively.

According to this monitoring result, the combustion duration in the combustion chamber 12a is uniformly distributed substantially parallel to the boundary portion 31 of the operable region 30, and relatively long combustion duration is distributed near the boundary portion 31 of the operable region 30, and shorter combustion duration is distributed farther away from the boundary portion 31 of the operable region 30. In other words, the combustion duration and abnormal combustion in the combustion chamber 12a have a correlation in which the probability of occurrence of abnormal combustion such as preignition and backfiring increases as the combustion duration increases; meanwhile, the probability of occurrence of abnormal combustion decreases as the combustion duration decreases. When the combustion duration becomes too short, preignition and knocking occur, but preignition and knocking can be monitored by knocking detection that detects characteristic cylinder internal pressure vibration.

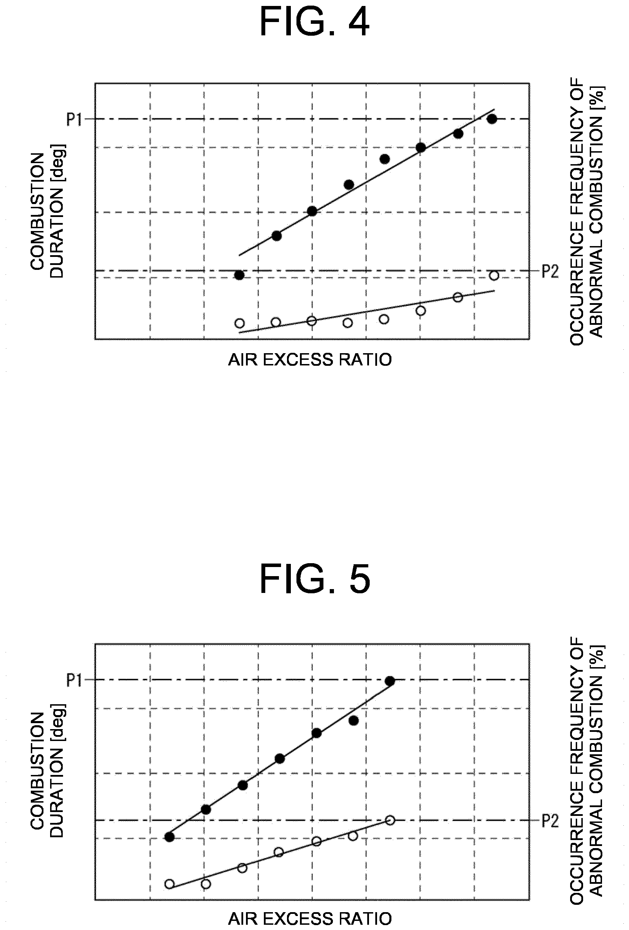

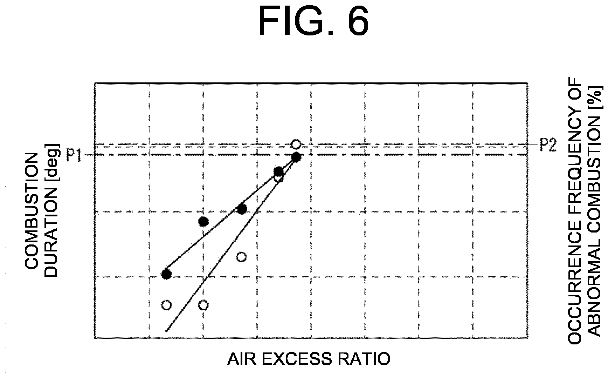

With respect to the result of monitoring the combustion duration as shown in FIG. 3, the change in combustion duration at each of predetermined ignition timings T1, T2, and T3 has good linearity with respect to the change in the air excess ratio (air-fuel ratio) as shown by the black circles in FIGs. 4, 5, and 6. It is thus easy to detect the change in the combustion duration in response to abnormal combustion. Therefore, when the combustion duration increases during operation of the engine device 1, approach of the combustion duration to dangerous duration P1 in which backfiring abnormal combustion occurs is easily detected before reaching the dangerous duration P1. In a case where the occurrence frequency of minor abnormal combustion occurring at a low frequency even in the operable region is evaluated, the change in the occurrence frequency at each of the predetermined ignition timings T1, T2, and T3 has poor linearity with respect to the change in the air excess ratio (air-fuel ratio) as shown by the white circles in FIGs. 4, 5, and 6. It is thus hard to detect the change in the combustion form heading to abnormal combustion making continuous operation impossible. Therefore, approach of the occurrence frequency to a dangerous frequency P2 at which backfiring abnormal combustion occurs is hardly detected before the occurrence frequency of abnormal combustion reaches the dangerous frequency P2.

Then, in the present embodiment, the control unit 5 detects the combustion duration related to the combustion enhancement degree in the combustion chamber 12a, estimates abnormal combustion occurring in the combustion chamber 12a or a precursor thereof on the basis of the correlation between the combustion duration and abnormal combustion, and determines and executes a suppression method for suppressing the abnormal combustion when the abnormal combustion or the precursor thereof is estimated.

Specifically, the control unit 5 firstly calculates, as the combustion duration, a difference (distance) between the crank angles of the crankshaft 17 at which the heat generation amount obtained by accumulating the heat generation rate over the crank angles during combustion process in the combustion chamber 12a is 10% and 90% of the total, respectively. Further, in the present embodiment, based on the correlation between the combustion duration and abnormal combustion in the combustion chamber 12a described above, the dangerous duration is preliminarily set as a threshold value of the combustion duration in which it can be estimated that the possibility of occurrence of abnormal combustion is high because the combustion duration is close to the boundary portion 31 of the operable region 30 when viewed from the side where the combustion duration is short. The dangerous duration is (short) combustion duration which does not reach the boundary portion 31 of the operable region 30 and in which a precursor of backfiring abnormal combustion that may occur in the future can be predicted. The control unit 5 monitors the combustion duration in the combustion chamber 12a, estimates that backfiring abnormal combustion occurs or that there is a precursor of abnormal combustion when the combustion duration exceeds the dangerous duration, and estimates that backfiring abnormal combustion does not occur or that there is no precursor of abnormal combustion when the combustion duration is equal to or less than the dangerous duration.

When abnormal combustion (or a precursor) is estimated, the control unit 5 determines and executes a suppression method for controlling each part of the engine device 1 so that the combustion duration in the combustion chamber 12a shortens as the suppression method for suppressing abnormal combustion. Note that safe duration (for example, 27 to 28 degrees) may be preliminarily set as combustion duration in which the engine device 1 can be safely operated without occurrence of abnormal combustion, and the control unit 5 may execute the suppression method until the combustion duration in the combustion chamber 12a becomes equal to or less than the safe duration.

For example, as the suppression method, the control unit 5 increases the power for ignition in the combustion chamber 12a by the ignition device 8, thereby shortening the combustion duration. In a case of the ignition device 8 employing a micro-pilot method, the control unit 5 increases the ignition power by increasing the injection amount and the injection pressure of the liquid fuel. At this time, the control unit 5 may gradually increase the ignition power by gradually increasing the injection amount and the injection pressure of the liquid fuel for each cycle. In addition, the control unit 5 may provide an upper limit of the ignition power by providing an upper limit of the injection amount or the injection pressure of the liquid fuel, and increase the ignition power to the upper limit of the ignition power.

Alternatively, in a case of the ignition device 8 employing a spark ignition method, the control unit 5 increases the ignition power by increasing the spark energy of the spark plug. At this time, the control unit 5 may gradually increase the ignition power by gradually increasing the spark energy of the spark plug for each cycle. Further, the control unit 5 may provide an upper limit of the ignition power by providing an upper limit of the spark energy of the spark plug, and increase the ignition power to the upper limit of the ignition power.

In addition, the control unit 5 executes richening of the air-fuel ratio in the combustion chamber 12a as the suppression method, thereby shortening the combustion duration. The control unit 5 richens the air-fuel ratio in the combustion chamber 12a by reducing the intake air amount with the throttle valve 7. At this time, the control unit 5 may gradually richen the air-fuel ratio by gradually reducing the intake air amount. Further, the control unit 5 may provide a richening upper limit by providing a lower limit of the intake air amount, and richen the air-fuel ratio to the richening upper limit.

Further, as the suppression method, the control unit 5 executes advancement of the ignition timing in the combustion chamber 12a by the ignition device 8, thereby shortening the combustion duration. The control unit 5 advances the ignition timing by advancing the injection timing of the liquid fuel in a case of the ignition device 8 employing a micro-pilot method. The control unit 5 advances the ignition timing by advancing the spark timing of the spark plug in a case of the ignition device 8 employing a spark ignition method. At this time, the control unit 5 may gradually advance the ignition timing by gradually advancing the injection timing of the liquid fuel and the spark timing of the spark plug for each cycle. Further, the control unit 5 may provide an advance upper limit of ignition timing by providing an upper limit of the injection timing of the liquid fuel or an upper limit of advancement of the spark timing of the spark plug, and advance the ignition timing to the advance upper limit.

Further, the control unit 5 executes reduction of the engine load (engine torque) of the engine 2 as the suppression method, thereby avoiding abnormal combustion. At this time, the control unit 5 may gradually reduce the engine load for each cycle. In addition, the control unit 5 may provide an engine load lower limit for the engine load to reduce the engine load to the engine load lower limit.

The control unit 5 is capable of increasing the ignition power in the combustion chamber 12a, richening the air-fuel ratio in the combustion chamber 12a, advancing the ignition timing in the combustion chamber 12a, and reducing the engine load as the suppression method. Therefore, priorities may be set for which suppression method to apply. For example, the control unit 5 may increase the ignition power in the combustion chamber 12a in preference to richening of the air-fuel ratio in the combustion chamber 12a, advancement of the ignition timing in the combustion chamber 12a, and reduction of the engine load. Further, the control unit 5 may richen the air-fuel ratio in the combustion chamber 12a in preference to the advancement of the ignition timing in the combustion chamber 12a and the reduction of the engine load. In addition, the control unit 5 may advance the ignition timing in the combustion chamber 12a in preference to the reduction of the engine load.

Note that the control unit 5 may stop the operation of the engine device 1 when the combustion duration cannot be shortened and it is difficult to avoid abnormal combustion (for example, when the combustion duration cannot be shortened to a predetermined safe duration or less or to another predetermined duration or less) even if the ignition power in the combustion chamber 12a is increased, the air-fuel ratio in the combustion chamber 12a is richened, the ignition timing in the combustion chamber 12a is advanced, and the engine load is reduced.

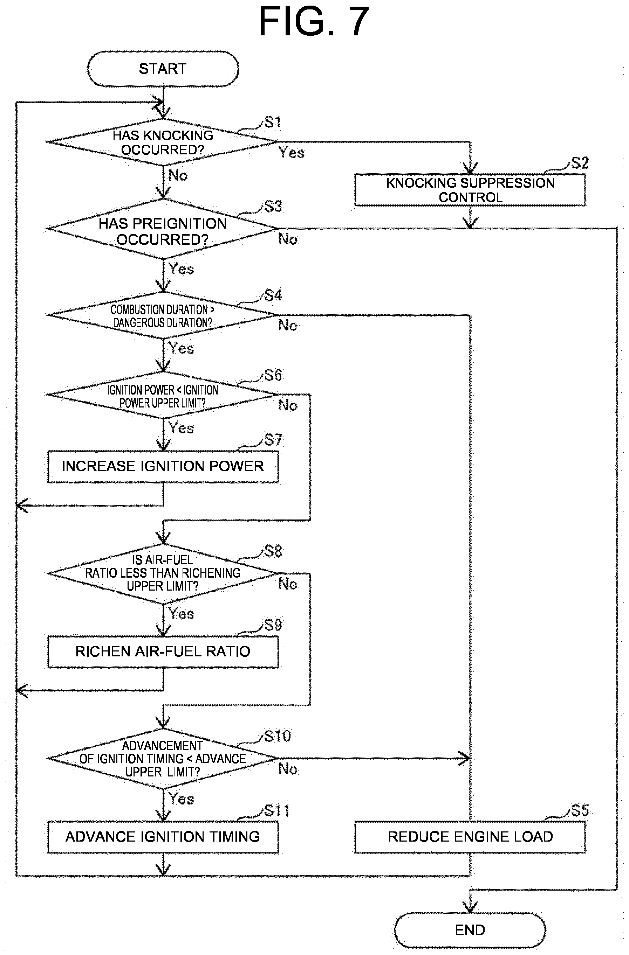

Next, an abnormal combustion suppression operation of the engine device 1 of the present embodiment will be described with reference to a flowchart shown in FIG. 7.

First, the control unit 5 determines whether knocking abnormal combustion has occurred in the engine 2 (step S1). When knocking has occurred (step S1: Yes), the control unit 5 performs knocking suppression control (step S2) and ends the suppression operation.

On the other hand, when knocking has not occurred (step S 1: No), the control unit 5 determines whether preignition abnormal combustion has occurred in the engine 2 (step S3).

When preignition has not occurred (step S3: No), the control unit 5 ends the suppression operation.

On the other hand, when preignition has occurred (step S3: Yes), the control unit 5 calculates, as the combustion duration, a difference (distance) between the crank angles of the crankshaft 17 at which the heat generation amount obtained by accumulating the heat generation rate over the crank angles during combustion process in the combustion chamber 12a is 10% and 90% of the total, detects the combustion duration corresponding to the rotation angle of the crankshaft 17 with the angle sensor 18, and determines whether the combustion duration exceeds the dangerous duration (step S4).

When the combustion duration is equal to or less than the dangerous duration (step S4: No), the control unit 5 executes reduction of the engine load (step S5), and the process returns to step S1 to repeat the suppression operation.

On the other hand, when the combustion duration exceeds the dangerous duration (step S4: Yes), the control unit 5 estimates a precursor of backfiring abnormal combustion and determines whether the ignition power is less than the ignition power upper limit in order to determine whether to increase the ignition power in the combustion chamber 12a by the ignition device 8 as the backfiring suppression method (step S6).

When the ignition power is less than the ignition power upper limit (step S6: Yes), the control unit 5 increases the ignition power by increasing the liquid fluid injection amount, the liquid fluid injection pressure, or the spark energy (step S7), and the process returns to step S1 to repeat the suppression operation.

On the other hand, when the ignition power is equal to or greater than the ignition power upper limit (step S6: No), the control unit 5 determines whether the air-fuel ratio is less than the richening upper limit in order to determine whether to richen the air-fuel ratio in the combustion chamber 12a, instead of increase of the ignition power, as the backfiring suppression method (step S8).

When the air-fuel ratio is less than the richening upper limit (step S8: Yes), the control unit 5 richens the air-fuel ratio in the combustion chamber 12a by reducing the intake air amount by the throttle valve 7 (step S9), and the process returns to step S1 to repeat the suppression operation.

On the other hand, when the air-fuel ratio is equal to or greater than the richening upper limit (step S8: No), the control unit 5 determines whether the advancement of the ignition timing is less than the advance upper limit in order to determine whether to advance the ignition timing in the combustion chamber 12a, instead of richening of the air-fuel ratio, as the backfiring suppression method (step S10).

When the advancement of the ignition timing is less than the advance upper limit (step S10: Yes), the control unit 5 advances the ignition timing by advancing the injection timing of the liquid fuel or the spark timing of the spark plug (step S11), and the process returns to step S1 to repeat the suppression operation.

On the other hand, when the advancement of the ignition timing is equal to or greater than the advance upper limit (step S10: No), the control unit 5 reduces the engine load, instead of advancement of the ignition timing (step S5), as the backfiring suppression method, and the process returns to step S1 to repeat the suppression operation.

As described above, according to the present embodiment, the engine device 1 which is driven by inputting gaseous fuel into the combustion chamber 12a of the engine 2 detects the combustion duration in the combustion chamber 12a, for example, the combustion duration related to the combustion enhancement degree, estimates abnormal combustion occurring in the combustion chamber 12a based on the correlation between the combustion duration and abnormal combustion (backfiring), and determines and executes the suppression method for suppressing the abnormal combustion when the abnormal combustion is estimated.

In other words, the method of controlling the engine device 1 driven by inputting gaseous fuel into the combustion chamber 12a of the engine 2 detects the combustion duration in the combustion chamber 12a, for example, the combustion duration as the combustion enhancement degree, estimates abnormal combustion occurring in the combustion chamber 12a based on the correlation between the combustion duration and abnormal combustion (backfiring), and determines and executes the suppression method for suppressing the abnormal combustion when the abnormal combustion is estimated. The control method may be executed by the control unit 5, and may be configured by a program, for example.

Consequently, the engine device 1 can improve controllability for suppressing abnormal combustion by representing the degree of combustion enhancement that causes abnormal combustion such as backfiring by the combustion duration calculated from the cylinder pressure (the internal pressure of the combustion chamber 12a) of the cylinder 13. Since slow combustion enhancement (incomplete combustion) in the combustion chamber 12a may cause preignition in the next and subsequent cycles, and further progress to cause backfiring, by determining the combustion duration as the combustion condition of the engine 2, it is possible to predict (estimate) the most dangerous backfiring in advance before the occurrence of the backfiring and to perform suppression control. Therefore, it is also possible to suppress accumulation of damage due to abnormal combustion in the engine 2, and to suppress damage to the engine 2, making it possible to operate the engine 2 more safely.

Further, according to the present embodiment, the engine device 1 performs control to shorten the combustion duration as the suppression method.

Consequently, in the engine device 1, unburned gas fuel due to slow combustion enhancement (incomplete combustion) is suppressed to shorten the combustion duration, and abnormal combustion such as preignition and backfiring in the next cycle and subsequent cycles can be suppressed and controlled before the occurrence of the abnormal combustion. In the control for shortening the combustion duration, since the combustion duration can be converged to a target value (for example, the safe duration) earlier, the control advantageously works especially during transient operation in which fast control is required.

Further, according to the present embodiment, the engine device 1 increases the ignition power in the combustion chamber 12a as the suppression method.

For example, according to the present embodiment, the engine device 1 increases the ignition power by increasing the injection amount of liquid fuel and/or by increasing the injection pressure of liquid fuel in the case of the engine 2 carrying out ignition in a micro-pilot method in which gas fuel is ignited by injection of liquid fuel, and increases the ignition power by increasing the spark energy in the case of the engine 2 carrying out ignition in a spark ignition method using a spark plug.

Thus, the engine device 1 can suppress unburned gas fuel by increasing the ignition power in the combustion chamber 12a to shorten the combustion duration, and can suppress and control abnormal combustion such as backfiring before the occurrence of the abnormal combustion.

Further, according to the present embodiment, the engine device 1 richens the air-fuel ratio in the combustion chamber 12a as the suppression method.

Consequently, the engine device 1 can suppress unburned gaseous fuel by richening the air-fuel ratio in the combustion chamber 12a to shorten the combustion duration, and abnormal combustion such as backfiring can be suppressed and controlled before the occurrence of the abnormal combustion. In addition, in the control for richening the air-fuel ratio, the combustion duration can be converged to a target value (for example, the safe duration) earlier.

According to the present embodiment, the engine device 1 advances the ignition timing in the combustion chamber 12a as the suppression method.

Consequently, the engine device 1 can suppress unburned gaseous fuel by advancing the ignition timing in the combustion chamber 12a to shorten the combustion duration, and abnormal combustion such as backfiring can be suppressed and controlled before the occurrence of the abnormal combustion. Since preignition occurs due to self-ignition in the combustion chamber 12a, preignition can also be suppressed by setting the ignition timing before the self-ignition occurs. In addition, in the control for advancing the ignition timing, it is possible to select an air excess ratio (air-fuel ratio) in a wider range.

Further, according to the present embodiment, the engine device 1 reduces the engine load as the suppression method.

Consequently, in the engine device 1, when abnormal combustion such as preignition occurs although the combustion duration is shorter than the preliminarily set dangerous duration or the combustion duration has been shortened by changing an operation parameter (ignition power, richening, or ignition advance), there is a possibility that a hot spot or the like occurs in the cylinder 13. Therefore, by reducing the engine load, abnormal combustion due to the hot spot or the like can be suppressed, and damage to the engine 2 can be suppressed thereby.

In addition, according to the present embodiment, as the suppression method, the engine device 1 increases the ignition power in the combustion chamber 12a in preference to the richening of the air-fuel ratio in the combustion chamber 12a, the advancement of the ignition timing in the combustion chamber 12a, and the reduction of the engine load, and/or richens the air-fuel ratio in the combustion chamber 12a in preference to the advancement of the ignition timing in the combustion chamber 12a and the reduction of the engine load, and/or advances the ignition timing in the combustion chamber 12a in preference to the reduction of the engine load.

Consequently, the engine device 1 can give priority to a practical suppression method such as the increase in ignition power, and can also give lower priority to a suppression method that causes inconvenience for users of the engine device 1, which is not desired to be performed, such as the reduction in the engine load.

In the example described in the embodiment described above, the engine device 1 is a gas engine configured such that the gas engine can be driven by inputting gaseous fuel such as hydrogen into the combustion chamber 12a of the engine 2. However, the present invention is not limited to such an example. In another example, the engine device 1 may be configured as a dual fuel engine that is driven by inputting at least one of gaseous fuel such as hydrogen and liquid fuel such as light oil or heavy oil into the combustion chamber 12a of the engine 2. In this case, gaseous fuel is input by the gaseous fuel injection unit 6, and liquid fuel is input by a liquid fuel injection unit such as the ignition device 8 employing a micro-pilot method in the engine device 1.

The engine device 1 of the dual fuel engine operates in either one operation mode of a gas mode in which gaseous fuel is input into the combustion chamber 12a to drive the engine device 1 or a diesel mode in which liquid fuel is input into the combustion chamber 12a to drive the engine device 1. As another operation mode, the engine device 1 operates in a multi-fuel mode in which both gaseous fuel and liquid fuel are input into the combustion chamber 12a to drive the engine device 1.

Incidentally, the present invention can be appropriately modified within a range not departing from the spirit or idea of the present invention which can be read from the claims and the entire specification, and an engine device and a method of controlling the engine device accompanying such modifications are also included in the technical idea of the present invention.

### Supplementary notes to invention

Hereinafter, the summary of the invention extracted from the above-described embodiments will be additionally described. Note that the respective configurations and the respective processing functions described in the following supplementary notes can be selectively and arbitrarily combined.

### Supplementary Note 1

An engine device driven by gaseous fuel, in which
combustion duration in a combustion chamber is detected;
abnormal combustion occurring in the combustion chamber is estimated based on a correlation between the combustion duration and abnormal combustion; and
a suppression method for suppressing the abnormal combustion is determined when the abnormal combustion is estimated.

### Supplementary Note 2

The engine device according to Supplementary Note 1, performing control to shorten the combustion duration as the suppression method.

### Supplementary Note 3

The engine device according to Supplementary Note 2, in which ignition power in the combustion chamber is increased as the suppression method.

### Supplementary Note 4

The engine device according to Supplementary Note 3, in which in a case of an engine carrying out ignition in a micro-pilot method in which the gas fuel is ignited by injection of liquid fuel, the ignition power is increased by increasing the injection amount of the liquid fuel and/or by increasing the injection pressure of the liquid fuel; and in a case of an engine carrying out ignition in a spark ignition method using a spark plug, the ignition power is increased by increasing spark energy.

### Supplementary Note 5

The engine device according to any of Supplementary Notes 2 to 4, in which an air-fuel ratio in the combustion chamber is richened as the suppression method.

### Supplementary Note 6

The engine device according to any of Supplementary Notes 2 to 5, in which an ignition timing in the combustion chamber is advanced as the suppression method.

### Supplementary Note 7

The engine device according to any of Supplementary Notes 2 to 6, in which an engine load is reduced as the suppression method.

### Supplementary Note 8

The engine device according to Supplementary Note 2, in which, as the suppression method, ignition power in the combustion chamber is increased in preference to richening of an air-fuel ratio in the combustion chamber, advancement of an ignition timing in the combustion chamber, and reduction of an engine load, and/or the air-fuel ratio in the combustion chamber is richened in preference to the advancement of the ignition timing in the combustion chamber and the reduction of the engine load, and/or the ignition timing in the combustion chamber is advanced in preference to the reduction of the engine load.

### Supplementary Note 9

A method of controlling an engine device driven by gaseous fuel, in which
combustion duration in a combustion chamber is detected;
abnormal combustion occurring in the combustion chamber is estimated based on a correlation between the combustion duration and abnormal combustion; and
a suppression method for suppressing the abnormal combustion is determined when the abnormal combustion is estimated.

### Supplementary Note 10

The method of controlling an engine device according to Supplementary Note 9, performing control to shorten the combustion duration as the suppression method.

### Supplementary Note 11

The method of controlling an engine device according to Supplementary Note 10, in which ignition power in the combustion chamber is increased as the suppression method.

### Supplementary Note 12

The method of controlling an engine device according to Supplementary Note 11, in which in a case of an engine carrying out ignition in a micro-pilot method in which the gas fuel is ignited by injection of liquid fuel, the ignition power is increased by increasing the injection amount of the liquid fuel and/or by increasing the injection pressure of the liquid fuel; and in a case of an engine carrying out ignition in a spark ignition method using a spark plug, the ignition power is increased by increasing spark energy.

### Supplementary Note 13

The method of controlling an engine device according to any of Supplementary Notes 10 to 12, in which an air-fuel ratio in the combustion chamber is richened as the suppression method.

### Supplementary Note 14

The method of controlling an engine device according to any of Supplementary Notes 10 to 13, in which an ignition timing in the combustion chamber is advanced as the suppression method.

### Supplementary Note 15

The method of controlling an engine device according to any of Supplementary Notes 10 to 14, in which an engine load is reduced as the suppression method.

### Supplementary Note 16

The method of controlling an engine device according to Supplementary Note 10, in which, as the suppression method, ignition power in the combustion chamber is increased in preference to richening of an air-fuel ratio in the combustion chamber, advancement of an ignition timing in the combustion chamber, and reduction of an engine load, and/or the air-fuel ratio in the combustion chamber is richened in preference to the advancement of the ignition timing in the combustion chamber and the reduction of the engine load, and/or the ignition timing in the combustion chamber is advanced in preference to the reduction of the engine load.

### REFERENCE SIGNS LIST

1 Engine device
2 Engine
3 Intake passage
4 Exhaust passage
5 Control unit
6 Gaseous fuel injection unit
7 Throttle valve
8 Ignition device
11 Cylinder block
12 Cylinder engine
12a Combustion chamber
13 Cylinder
14 Piston
15 Cylinder head
16 Connecting rod
17 Crankshaft
18 Angle sensor
19 Pressure sensor
20 Torque sensor
21 Air-fuel ratio sensor
22 Intake port
23 Exhaust port
24 Intake valve
25 Exhaust valve

## Claims

1. An engine device driven by gaseous fuel, wherein
combustion duration in a combustion chamber is detected;
abnormal combustion occurring in the combustion chamber is estimated based on a correlation between the combustion duration and abnormal combustion; and
a suppression method for suppressing the abnormal combustion is determined when the abnormal combustion is estimated.

2. The engine device according to Claim 1, performing control to shorten the combustion duration as the suppression method.

3. The engine device according to Claim 2, wherein ignition power in the combustion chamber is increased as the suppression method.

4. The engine device according to Claim 3, wherein in a case of an engine carrying out ignition in a micro-pilot method in which the gas fuel is ignited by injection of liquid fuel, the ignition power is increased by increasing an injection amount of the liquid fuel and/or by increasing an injection pressure of the liquid fuel; and in a case of an engine carrying out ignition in a spark ignition method using a spark plug, the ignition power is increased by increasing spark energy.

5. The engine device according to Claim 2, wherein an air-fuel ratio in the combustion chamber is richened as the suppression method.

6. The engine device according to Claim 2, wherein an ignition timing in the combustion chamber is advanced as the suppression method.

7. The engine device according to Claim 2, wherein an engine load is reduced as the suppression method.

8. The engine device according to Claim 2, wherein, as the suppression method, ignition power in the combustion chamber is increased in preference to richening of an air-fuel ratio in the combustion chamber, advancement of an ignition timing in the combustion chamber, and reduction of an engine load, and/or the air-fuel ratio in the combustion chamber is richened in preference to the advancement of the ignition timing in the combustion chamber and the reduction of the engine load, and/or the ignition timing in the combustion chamber is advanced in preference to the reduction of the engine load.

9. A method of controlling an engine device driven by gaseous fuel, wherein
combustion duration in a combustion chamber is detected;
abnormal combustion occurring in the combustion chamber is estimated based on a correlation between the combustion duration and abnormal combustion; and
a suppression method for suppressing the abnormal combustion is determined when the abnormal combustion is estimated.
